# EUROPÄISCHE PATENTSCHRIFT

(11) **EP 1 455 117 B1**
(45) Veröffentlichungstag und Bekanntmachung des Hinweises auf die Patenterteilung: **19.07.2006**
(21) Anmeldenummer: 04450049.4
(22) Anmeldetag: 05.03.2004
(51) Int. Cl.: F16H 21/36, F02G 1/044, F16F 15/26

(54) **Stirlingmotor sowie Biomassefeuerungsanlage**
Stirling engine and biomass combustion plant
Moteur Stirling et installation de combustion de biomasse

(30) Priorität: 06.03.2003 AT 3352003
(43) Veröffentlichungstag der Anmeldung: 08.09.2004
(73) Patentinhaber: Stanzel, Karl Wolfgang, 8010 Graz (AT); Ptak, Georg, 8750 Oberweg/Judenburg (AT)
(72) Erfinder: Stanzel, Karl Wolfgang, 8010 Graz (AT); Ptak, Georg, 8750 Oberweg/Judenburg (AT)
(74) Vertreter: Sonn & Partner Patentanwälte

(56) Entgegenhaltungen:
- DE-A- 2 305 811
- DE-A- 3 114 459
- US-A- 5 678 406
- US-B1- 6 349 684

## Beschreibung

Die Erfindung betrifft einen Stirlingmotor mit vier jeweils um 90° zueinander verdreht angeordneten Arbeitskolben, mit einem Planetengetriebe zur Umsetzung der Linearbewegung der Arbeitskolben in eine Rotationsbewegung einer gemeinsamen Abtriebswelle, wobei die Schwerpunkte der vier Arbeitskolben in einer gemeinsamen Ebene senkrecht zur Drehachse der Abtriebswelle angeordnet sind, und die Arbeitskolben zur Geradeführung an einer als Planetenrad ausgebildeten außenverzahnten Kurbel drehbar gelagert sind, die in zumindest einem innenverzahnten Hohlrad umläuft. Weiters betrifft die Erfindung eine Biomassefeuerungsanlage mit einer Brennkammer.

Bei Stirling- bzw. Heißgasmotoren wird Arbeitsgas - meist unter erhöhtem Druck - eingeschlossen und in einem geschlossenen Kreisprozess abwechselnd einer kalten und einer heißen Umgebung ausgesetzt, wodurch im Arbeitsgasdruck Schwankungen entstehen, die von den Kolben in mechanische Energie umgewandelt werden. Zur Umsetzung der Linearbewegung der Arbeitskolben in eine Rotationsbewegung einer Abtriebswelle sind aus dem Stand der Technik verschiedene Getriebearten, beispielsweise Schubkurbel- oder Planetengetriebe, bekannt.

Aus der DE 43 36 976 A1 und der US 5 678 406 A ist ein Stirlingmotor der eingangs angeführten Art bekannt, bei dem ein Planetengetriebe zur Umsetzung der Linearbewegung der Arbeitskolben in eine Rotationsbewegung einer Abtriebswelle vorgesehen ist, wobei die Kolbenstangen über eine äußere Kurbel an einer inneren Kurbel angelenkt sind. Die innere Kurbel bildet zugleich den Steg für ein außenverzahntes Planetenrad, das in einem innenverzahnten Hohlrad umläuft. Um einen vollständigen Massenausgleich zu erzielen, ist es bei einem derartigen Planetengetriebe jedoch erforderlich, dass sowohl die innere Kurbel als auch die äußere Kurbel mit zumindest einem Gegengewicht als Ausgleichsmasse versehen sind. Somit ergibt sich ein vergleichsweise aufwendiger Aufbau des Planetengetriebes mit relativ großen bewegten Massen zum Ausgleich freier Massenkräfte und -momente.

Ein weiterer Stirlingmotor ist beispielsweise aus der US 4 241 580 A bekannt, in der ein Stirlingmotor mit doppelt wirkenden Arbeitskolben geoffenbart, bei dem eine Leistungsregelung mittels variabler Räume vorgsehen ist.

Andererseits sind herkömmliche 2- oder 4-Takt-Verbrennungsmotoren mit vier jeweils um 90° zueinander verdreht angeordneten Hubkolben bekannt. Ein derartiger Verbrennungsmotor ist beispielsweise in der DE 30 23 363 A1 gezeigt. Dieser Verbrennungsmotor weist zwei Arbeitskolbenpaare auf, die in einer Ebene senkrecht zur Drehachse von zwei gesonderten Antriebswellen seitlich zueinander versetzt angeordnet sind. Demzufolge schneiden sich deren Achsen nicht in einem Punkt der Hauptdrehachse, so dass hier freie Massenkräfte und -momente auftreten.

Aus der DE 23 05 811 A ist ein Planetengetriebe für einen Verbrennungsmotor bekannt, bei dem als Gegengewicht zur Planetenkurbelwelle ein exzentrisches Schwungrad vorgesehen ist, um die Bewegung der Kolben aus dem oberen und unteren Totpunkt zu ermöglichen.

Weiters ist aus der US 6,349,684 B1 ein Kurbelmechanismus für eine Brennkraftmaschine bekannt, bei der ein Planetengetriebe derart ausgebildet ist, dass sich am obersten Punkt des Verbrennungstaktes die erste Kurbel in der 0°-Position und die zweite Kurbel im Wesentlichen in der 90°-Position befinden, so dass die erste und die zweite Kurbel am Ende eines Arbeitshubs im Wesentlichen eine 180°-Stellung einnehmen.

In der DE 31 14 459 A1 ist ein Kurbeltrieb für eine andersartige Hubkolbenmaschine geoffenbart, bei der ein Planetengetriebe zur Bewegungsübertragung vorgesehen ist.

Ziel der vorliegenden Erfindung ist nun einen Stirlingmotor der eingangs angeführten Art mit einem vergleichsweise einfach aufgebauten Getriebe zu schaffen, bei dem zuverlässig ein vollständiger Ausgleich freier Massenkräfte und -momente erzielt wird, so dass ein möglichst vibrationsfreier Betrieb ermöglicht wird. Darüber hinaus soll ein Selbstanlaufen des Motors lediglich durch Wärmezufuhr möglich sein, so dass der Stirlingmotor insbesondere auch im Zusammenhang mit einer Biomassefeuerungsanlage verwendet werden kann.

Dies wird bei einem Stirlingmotor der eingangs angeführten Art dadurch erzielt, dass zum vollständigen Ausgleich freier Massenkräfte und -momente lediglich der gemeinsamen Abtriebswelle zumindest zwei Ausgleichsmassen derart zugeordnet sind, dass die Arbeitskolben und die mit den Arbeitskolben mitbewegten Getriebeteile einen gemeinsamen, in der Achse der Abtriebswelle liegenden Schwerpunkt aufweisen. Der Gesamtschwerpunkt des Stirlingmotors bewegt sich somit nicht.

Zur Erzielung eines vollständigen Ausgleichs freier Massenkräfte und -momente ist es bei dem Stirlingmotor mit jeweils um 90° zueinander verdreht angeordneten Arbeitskolben ausreichend, dass der Gesamtschwerpunkt des Getriebes auf der Drehachse der Abtriebswelle liegt, und dass beide Zylinderachsen in einer Ebene liegen, wobei hiezu die außenverzahnte Kurbel keine - wie bei der aus dem Stand der Technik bekannten Vorrichtung - Ausgleichsmassen aufweisen muss, sondern hinsichtlich einer konstruktiv einfachen Ausgestaltung des Getriebes es ausreichend ist, wenn der inneren Kurbel, d.h. der gemeinsamen Abtriebswelle, zumindest zwei Ausgleichsmassen zugeordnet sind. Durch die verkettete Anordnung der vier Arbeitsräume des Stirlingmotors, die jeweils einen Phasenwinkel von im Wesentlichen 90° zueinandern aufweisen, ergibt sich ein Gesamtabtriebsmoment, das bei jedem Drehwinkel positiv ist, so dass zudem ein Selbstanlaufen des Stirlingmotors bei Wärmezufuhr erzielt werden kann.

Für eine konstruktiv einfache Ausgestaltung des Stirlingmotors ist es günstig, wenn doppelt wirkende Arbeitskolben vorgesehen sind.

Weiters ist es für eine konstruktiv einfache Ausgestaltung des Stirlingmotors von Vorteil, wenn eine Ausgleichsmasse mit der Abtriebswelle einstückig ausgebildet ist.

Für eine zuverlässige Schmierung der Getriebeteile ist es günstig, wenn durch die Verzahnung zwischen der außenverzahnten Kurbel und dem innenverzahnten Hohlrad Öl gefördert wird. Somit kann auf eine gesonderte Ölpumpe zur Umwälzung von Schmieröl verzichtet werden.

Wenn die Kurbel in beiden Endabschnitten eine Außenverzahnung zum Eingriff in zwei endseitig angeordneten innenverzahnten Hohlrädern aufweist, ergibt sich eine ausgewogene Lagerung der Kurbel. Selbstverständlich könnte jedoch auch ein einziges Zahnradpaar die gewünschte Übertragung von Kräften als auch die Geradeführungsfunktion der Kolben übernehmen, wobei dann ein zusätzliches Lager zur Vermeidung einer Verkantung der Kurbel vorzusehen wäre.

Um zuverlässig ein Verkanten der Kurbel zu vermeiden, ist es von Vorteil, wenn die Kurbel zwischen den beiden Hohlrädern in den Ausgleichsmassen, vorzugsweise mittels Nadel- oder Rolllagern, exzentrisch zu der Abtriebswelle gelagert ist.

Hinsichtlich einer statisch einwandfreien Lagerung der Abtriebswelle ist es günstig, wenn die Ausgleichsmassen innenseitig zur Kurbel und außenseitig zu einem drehfest angeordneten Gehäuse gelagert sind, wobei ein Lager ein Loslager und ein Lager ein Festlager ist.

Die erfindungsgemäße Biomassefeuerungsanlage der eingangs angeführten Art ist dadurch gekennzeichnet, dass in der Brennkammer ein Stirlingmotor nach einem der Ansprüche 1 bis 7 vorgesehen ist.

Da bei dem erfindungsgemäßen Stirlingmotor - wie vorstehend beschrieben - keine freien Massenkräfte bzw. -momente auftreten, kann dieser ohne zusätzliche Hilfsmittel selbstanlaufend in einer Biomassefeuerungsanlage integriert werden, so dass er bei Wärmezufuhr aus der Brennkammer der Biomassefeuerungsanlage selbsttätig anläuft. Somit wird alleine über die Intensität der Wärmezufuhr die Leistung des Stirlingmotors bestimmt, wobei diese beispielsweise zum Antrieb eines Elektrogenerators herangezogen werden kann.

Für eine effiziente Wärmeübertragung an das Arbeitsgas ist es günstig, wenn an die Arbeitszylinder des Stirlingmotors zur Erhitzung des Arbeitsgases vom Arbeitsgas durchströmte Erhitzerrohre anschließen. Hierdurch können die Flammen aus der Brennkammer ihre Wärme einerseits durch Flammstrahlung und andererseits durch Konvektion beim Durchströmen an die Erhitzerrohre abgeben, so dass eine Ausnutzung der Strahlungswärme und ein widerstandsarmer Durchtritt der heißen Rauchgase ermöglicht wird. Die geringfügig abgekühlten Verbrennungsgase der Biomassefeuerungsanlage können zudem nach der Wärmeübertragung an die Erhitzerrohre den bei konventionellen Biomassefeuerungsanlagen üblichen Weg zur Erzeugung von Wärme fortsetzen.

Um Biomassefeuerungsanlagen auch nachträglich mit dem erfindungsgemäßen Stirlingmotor ausstatten zu können bzw. je nach Wunsch dem Stirlingmotor beim Betrieb der Biomassefeuerungsanlage zuschalten zu können, ist es günstig, wenn der Stirlingmotor modular in der Brennkammer der Biomassefeuerungsanlage integrierbar ist.

Die Erfindung wird nachstehend anhand von einem in der Zeichnung dargestellten bevorzugten Ausführungsbeispiel, auf das sie jedoch nicht beschränkt sein soll, noch weiter erläutert. Im Einzelnen zeigen in der Zeichnung:
Fig. 1 eine teilweise aufgebrochene Ansicht eines Stirlingmotors mit einem Planetengetriebe;
Fig. 2 eine perspektivische Ansicht des Stirlingmotors gemäß Fig. 1;
Fig. 3 eine Draufsicht auf das Planetengetriebe samt Arbeitskolben;
Fig. 4 einen Schnitt gemäß der Linie IV-IV in Fig. 3;
Fig. 5 eine teilweise aufgebrochene perspektivische Ansicht des Planetengetriebes des Stirlingmotors samt Arbeitskolben; und
Fig. 6 schematisch eine perspektivische teilweise aufgebrochene Ansicht einer Biomassefeuerungsanlage mit einem integrierten Stirlingmotor.

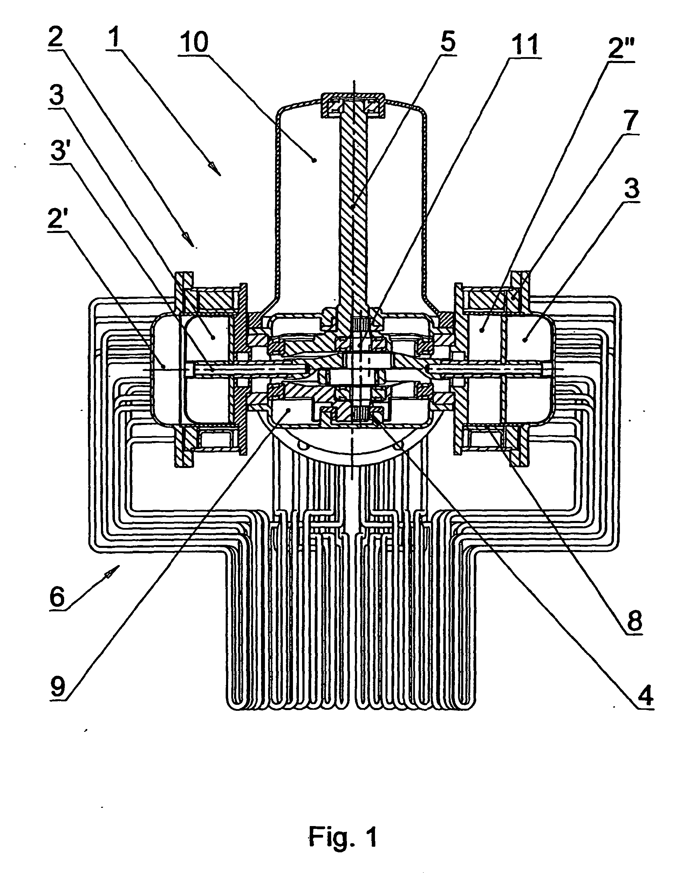

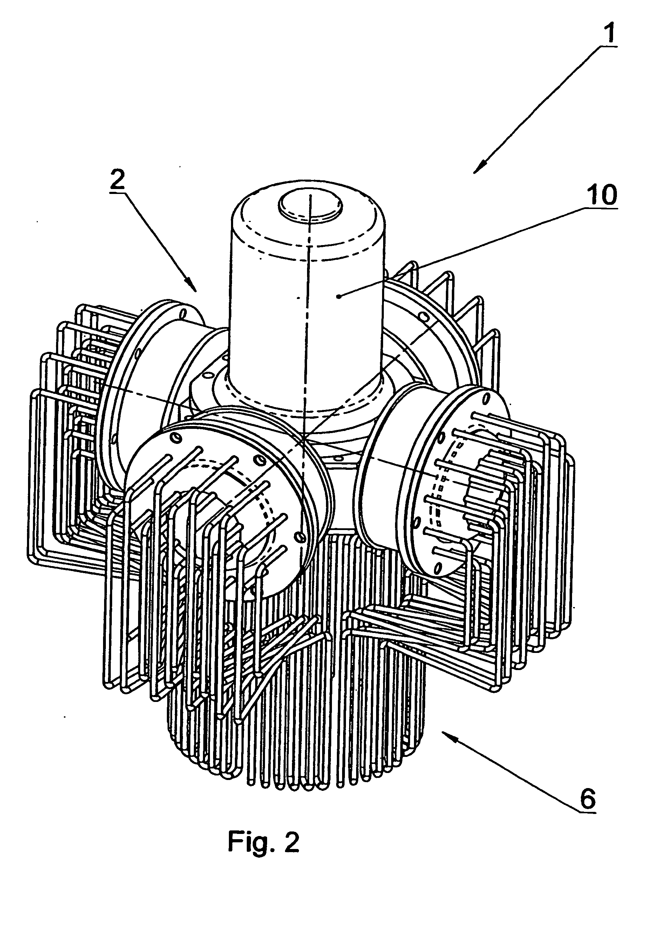

In den Figuren 1 und 2 ist ein Stirlingmotor 1 gezeigt, bei dem vier Arbeitszylinder 2 mit darin verschiebbar gelagerten Arbeitskolben 3 jeweils um 90° zueinander verdreht angeordnet sind, so dass sich bei einer Draufsicht auf den Stirlingmotor 1 eine sog. X-Anordnung der Arbeitszylinder bzw. Kolben ergibt.

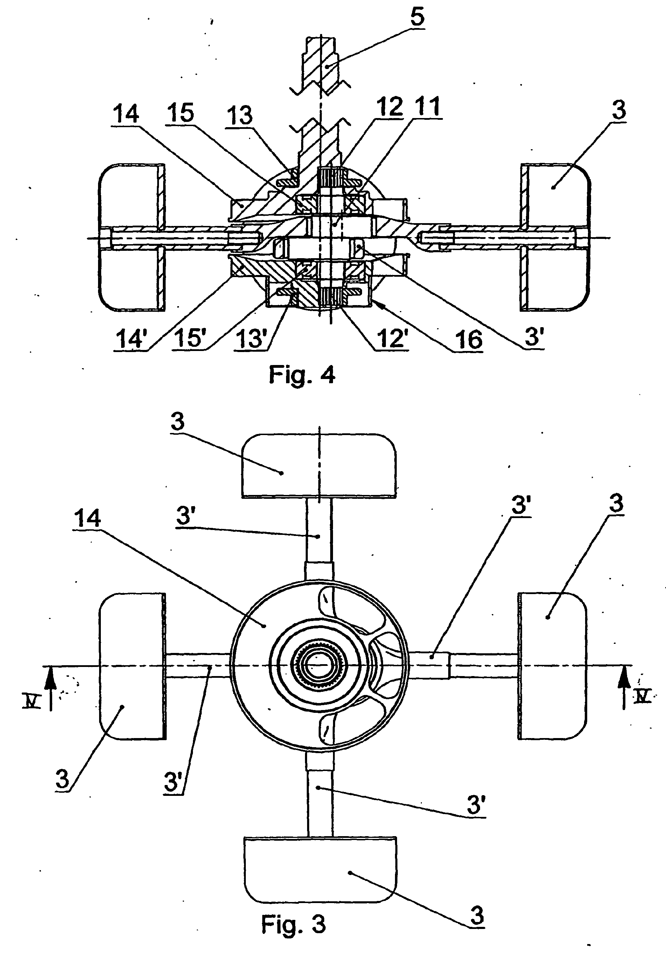

Die vier Kolben 3, die an zwei doppelten Kolbenstangen 3' befestigt sind, sind über ein Planetengetriebe 4 (vgl. insbesondere Fig. 4) miteinander gekoppelt, wodurch die Linearbewegung der Arbeitskolben 3 in eine Rotationsbewegung einer Abtriebswelle 5 umgesetzt wird, und zugleich auch die für den Stirlingmotor erforderliche phasenverschobene Bewegung zwischen den Kolbenpaaren sowie eine exakte Geradeführung der Arbeitskolben 3 in den Arbeitszylindern 2 erzielt wird.

An die Zylinder 2 schließen jeweils außenliegende Erhitzerrohre 6 an, in welchen das darin befindliche Arbeitsgas erhitzt wird und in einen heißen Arbeitsraum 2' des Arbeitszylinders 2 strömt. Die Erhitzerrohre 6 münden jeweils in einem Regenerator 7, über den bei jedem Kolbenhub im Arbeitszylinder 2 durch Überströmen des Gases vom heißen Bereich 2' in den kalten Bereich 2" (und umgekehrt) ein Teil der Wärme ausgetauscht wird.

Der Regenerator 7 ist - ähnlich einem Hohlzylinder - jeweils etwa in der Mitte des Arbeitszylinders 2 aufgesteckt. Jeder Regenerator 7 ist mit den Erhitzerrohren 6 und einem Wärmetauscher bzw. Kühler 8 verbunden und mit Metallsieben gefüllt. Somit wird - je nach Richtung, in der das Arbeitsgas strömt - das aus den Erhitzerrohren 6 strömende Arbeitsgas gekühlt bzw. aus dem Kühler 8 strömende Arbeitsgas erwärmt. Die Kühler 8 sind jeweils ringförmig um den inneren, getriebenahen Teil eines Arbeitszylinders 2 zwischen dem Regenerator 7 und einem Getriebegehäuse 9 angeordnet und kühlt diesen Bereich des Arbeitszylinders 2. Die Kühler 8 bestehen arbeitsgasseitig aus einem Rohr, das den Regenerator 7 mit der Unterseite des Kolbens 3 des nächsten Zylinders 2 verbindet. Damit wird - je nach Richtung, in der das Arbeitsgas strömt - das aus dem Regenerator 7 strömende Arbeitsgas gekühlt bzw. das aus dem kalten Bereich 2" des nächsten Zylinders 2 strömende Arbeitsgas erwärmt.

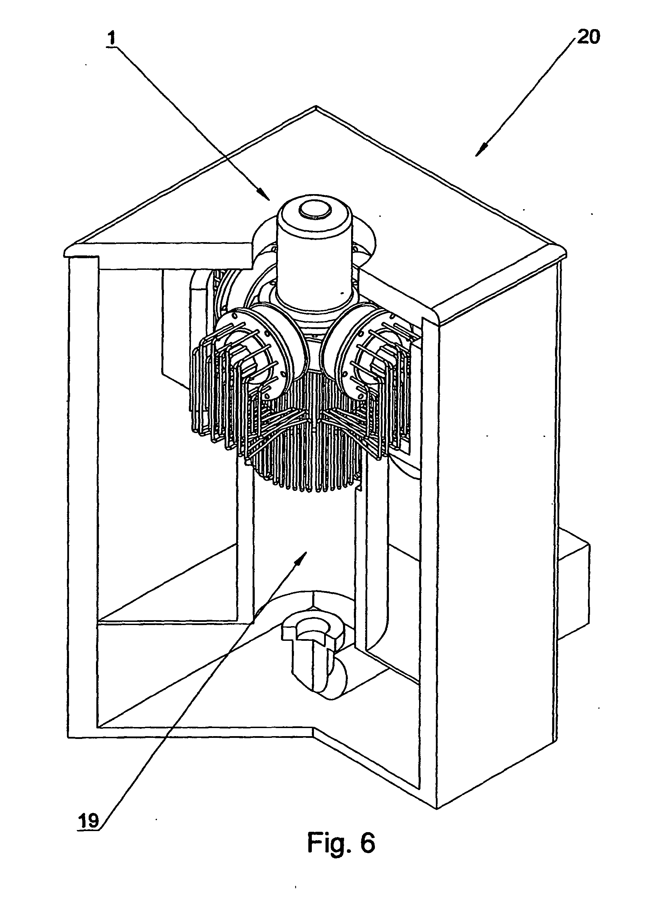

Als Kühlmedium kann Wasser vorgesehen sein, das mit dem Heizwasserkreislauf z.B. einer Biomassefeuerungsanlage 20 (vgl. Fig. 6) verbunden ist und so die Nutzung der Abwärme des Motors zu Heizzwecken ermöglicht.

Das Getriebegehäuse 9 ist wassergekühlt, druckdicht gekapselt, und enthält neben dem Getriebe 4 Schmieröl, eine Schmierölpumpe und eventuell eine Vorrichtung, um den Gasdruck zu regulieren.

An das Getriebegehäuse sind die vier Arbeitszylinder 2 mit Kühler 8, Regenerator 7 und Erhitzerrohre 6 sowie ein Adapter für die Einbindung in eine Biomassefeuerungsanlage 20 (vgl. Fig. 7) und ein Stromgenerator 10 angeflanscht.

Wenn der angeflanschte Generator 10 ebenfalls gas- und druckdicht ausgeführt ist, dann stellen die Kolbenstangen 3' die einzige, dynamisch abzudichtende Verbindung dar, welche aber nicht den vollen Arbeitsdruck abdichten müssen, sondern nur die Druckdifferenz zum Getriebegehäuse 9, welche relativ niedrig ist.

Der Druck im Getriebegehäuse 9 und im Generator 10 ist annähernd gleich hoch wie der mittlere Druck der vier Arbeitsgasvolumina, wobei dieser Druck vorteilhafterweise nur sehr wenig schwankt.

Der Stromgenerator 10 wird vorteilhafterweise netzgekoppelt betrieben, wobei die Leistungsabgabe an das Stromnetz entsprechend der Wärmezufuhr der Feuerungsanlage an das Arbeitsgas erfolgt.

Um einen auch nach längerem Stillstand selbstanlaufenden Stirlingmotor zu erzielen, dessen Leistung lediglich durch die Intensität der Wärmezufuhr und den Gasdruck bestimmt wird, wobei der Motor ohne freie Massenkräfte und -momente betrieben werden kann, sind die Arbeitskolben 3 über das in den Figuren 3 bis 5 im Detail dargestellte Planetengetriebe 4 miteinander gekoppelt.

Das Planetengetriebe 4 weist eine Kurbel 11 auf, an welcher die beiden Kolbenstangen 3' drehbar gelagert sind. Die Kurbel 11 weist in ihren beiden Endbereichen jeweils eine Außenverzahnung 12, 12' auf, wobei anstelle der unteren Verzahnung auch lediglich eine Lagerung, beispielsweise mittels Kugellagern, zur Kraftaufnahme und zur Verhinderung einer Verkantung vorgesehen sein kann.

Die Kurbel 11 greift mit ihren endseitigen Verzahnungen 12, 12' in einem oberen und einem unteren Hohlrad 13, 13' kämmend ein, so dass die Kurbel 11 in den Hohlrädern 13, 13' in der Art eines Planetenrades umläuft. Hiebei nimmt die Kurbel 11 zwei Ausgleichsmassen 14, 14' mit, so dass der gemeinsame Schwerpunkt aller bewegten Teile sich auf der Drehachse der Abtriebswelle 5 befindet. Da sich zudem die Schwerpunkte der beiden Doppelkolben 3 in einer Ebene senkrecht zur Drehachse befinden, wird ein vollständiger Ausgleich der freien Massenkräfte und -momente erzielt.

Die Kurbel 11 ist in den Ausgleichsmassen 14, 14' mittels Kugellagern 15, 15' gelagert, wobei die Ausgleichsmassen 14, 14' radial außen wiederum für eine statisch einwandfreie Lagerung an dem drehfest angeordneten Getriebegehäuse 9 gelagert sind.

Das untere Hohlrad 13' ist zudem von einem Ansaugrohr 16 umgeben, über welches Öl in das Innere des Getriebegehäuses 9 mittels der Verzahnung zwischen der Kurbel 11 und dem Hohlrad 13' gefördert wird. Das Öl wird somit im Inneren des Getriebegehäuses 9 verstäubt, so dass das Vorsehen einer gesonderten Ölpumpe nicht erforderlich ist.

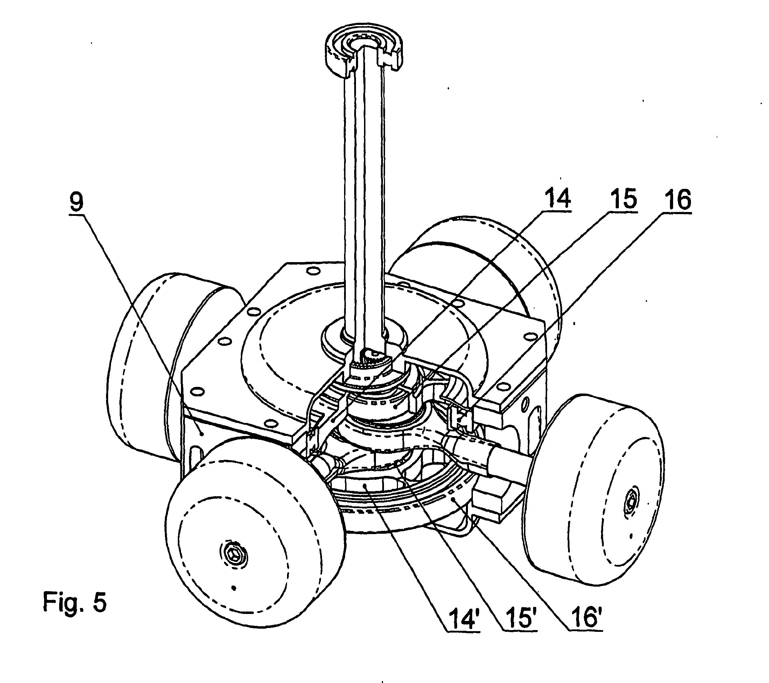

In Fig. 5 ist zudem noch ersichtlich, dass die Ausgleichsmassen 14, 14' zusätzlich zu ihrer innenseitigen Lagerung mittels Lagern 15, 15' auch radial außen im Getriebegehäuse 9 mittels Lagern 16, 16' gelagert sind. Als Lager 15, 15' bzw. 16, 16' können insbesondere Kugel- oder Nadellager vorgesehen sein, wobei für eine statisch einwandfreie Lagerung entweder die Lager 15, 15' als Loslager und die Lager 16, 16' als Festlager (oder umgekehrt) angeordnet sind.

In Fig. 6 ist der Stirlingmotor 1 in einer Brennkammer 19 einer Biomassefeuerungsanlage 20 angeordnet, so dass die Flammen aus der Brennkammer 19 ihre Wärme einerseits durch Flammstrahlung und andererseits durch Konvektion beim Durchströmen an die Erhitzerrohre 6 des Stirlingmotors 1 abgeben. Durch diese Anordnung wird sowohl eine Ausnutzung der Strahlungswärme als auch ein widerstandsarmer Durchtritt des heißen Rauchgases ermöglicht, das nach der Wärmeübertragung an die Erhitzerrohre den bei konventionellen Biomassefeuerungsanlagen üblichen Weg zur Erzeugung von Wärme fortsetzt.

## Patentansprüche

1. Stirlingmotor (1) mit vier jeweils um 90° zueinander verdreht angeordneten Arbeitskolben (3), mit einem Planetengetriebe (4) zur Umsetzung der Linearbewegung der Arbeitskolben (3) in eine Rotationsbewegung einer gemeinsamen Abtriebswelle (5), wobei die Schwerpunkte der vier Arbeitskolben (3) in einer gemeinsamen Ebene senkrecht zur Drehachse der Abtriebswelle (5) angeordnet sind, und die Arbeitskolben (3) zur Geradeführung an einer als Planetenrad ausgebildeten außenverzahnten Kurbel (11) drehbar gelagert sind, die in zumindest einem innenverzahnten Hohlrad (13, 13') umläuft, wobei zum vollständigen Ausgleich freier Massenkräfte und -momente lediglich der gemeinsamen Abtriebswelle (5) zumindest zwei Ausgleichsmassen (14, 14') derart zugeordnet sind, dass die Arbeitskolben (3) und die mit den Arbeitskolben (3) mitbewegten Getriebeteile einen gemeinsamen, in der Achse der Abtriebswelle (5) liegenden Schwerpunkt aufweisen.

2. Stirlingmotor nach Anspruch 1, **dadurch gekennzeichnet, dass** doppelt wirkende Arbeitskolben (3) vorgesehen sind.

3. Stirlingmotor nach Anspruch 1 oder 2, **dadurch gekennzeichnet, dass** eine Ausgleichsmasse (14) mit der Abtriebswelle (5) einstückig ausgebildet ist.

4. Stirlingmotor nach Anspruch 2, **dadurch gekennzeichnet, dass** durch die Verzahnung zwischen der außenverzahnten Kurbel (11) und dem innenverzahnten Hohlrad (13') Ö1 gefördert wird.

5. Stirlingmotor nach einem der Ansprüche 1 bis 4, **dadurch gekennzeichnet, dass** die Kurbel (11) in beiden Endabschnitten eine Außenverzahnung (12, 12') zum Eingriff in zwei endseitig angeordneten innenverzahnten Hohlrädern (13, 13') aufweist.

6. Stirlingmotor nach Anspruch 5, **dadurch gekennzeichnet, dass** die Kurbel (11) zwischen den beiden Hohlrädern (13, 13') in den Ausgleichsmassen (14, 14'), vorzugsweise mittels Nadel- oder Rolllagern (16, 16'), exzentrisch zu der Abtriebswelle (5) gelagert ist.

7. Stirlingmotor nach einem der Ansprüche 3 bis 6, **dadurch gekennzeichnet, dass** die Ausgleichsmassen (14, 14') innenseitig zur Kurbel (11) und außenseitig zu einem drehfest angeordneten Gehäuse (9) gelagert sind, wobei ein Lager (15, 15'; 16, 16') ein Loslager und ein Lager (15, 15'; 16, 16') ein Festlager ist.

8. Biomassefeuerungsanlage (20) mit einer Brennkammer (19), **dadurch gekennzeichnet, dass** in der Brennkammer (19) ein Stirlingmotor (1) nach einem der Ansprüche 1 bis 7 vorgesehen ist.

9. Biomassefeuerungsanlage nach Anspruch 8, **dadurch gekennzeichnet, dass** an die Arbeitszylinder (2) des Stirlingmotors (1) zur Erhitzung des Arbeitsgases vom Arbeitsgas durchströmte Erhitzerrohre (6) anschließen.

10. Biomassefeuerungsanlage nach Anspruch 8 oder 9, **dadurch gekennzeichnet, dass** der Stirlingmotor (1) modular in der Brennkammer (19) der Biomassefeuerungsanlage (20) integrierbar ist.

## Claims

1. A Stirling engine (1) having four working pistons (3) each arranged in a manner rotated by 90° relative to one another, comprising a planetary gear (4) for converting the linear movement of the working pistons (3) into a rotational movement of a common output shaft (5), the centers of gravity of the four working pistons (3) being located in a common plane extending perpendicular to the axis of rotation of the output shaft (5), and the working pistons (3), for linear guidance, being rotationally mounted on an externally toothed crank (11) which is designed as a planetary wheel rotating in at least one internally toothed hollow wheel (13, 13'), wherein, for fully balancing free forces and moments of inertia, at least two balancing masses (14, 14') are merely assigned to the common output shaft (5) in a manner that the working pistons (3) and the transmission parts moved along with the working pistons (3) have a common center of gravity located in the axis of the output shaft (5) .

2. A Stirling engine according to claim 1, **characterized in that** double-acting working pistons (3) are provided.

3. A Stirling engine according to claim 1 or 2, **characterized in that** a balancing mass (14) is designed in one piece with the drive shaft (5).

4. A Stirling engine according to claim 2, **characterized in that** oil is transported through the toothing between the externally toothed crank (11) and the internally toothed hollow wheel (13') .

5. A Stirling engine according to any one of claims 1 to 4, **characterized in that** the crank (11) in its two end sections comprises an external toothing (12, 12') for engagement in two internally toothed hollow wheels (13 and 13', respectively) arranged on the end sides.

6. A Stirling engine according to claim 5, **characterized in that** the crank (11) is mounted between the two hollow wheels (13, 13') in the balancing masses (14, 14'), preferably by means of needle bearings or roller bearings (16, 16'), eccentrically to the output shaft (5).

7. A Stirling engine according to any one of claims 3 to 6, **characterized in that** the balancing masses (14, 14') are mounted on the inner side towards the crank (11) and on the outer side towards a housing (9) arranged in a rotationally fast manner, one of the bearings (15, 15'; 16, 16') being a loose bearing and the other of the bearings (15, 15'; 16, 16') being a fixed bearing.

8. A biomass combustor (20) including a combustion chamber (19), **characterized in that** a Stirling engine (1) according to any one of claims 1 to 7 is provided in the combustion chamber (19).

9. A biomass combustor according to claim 8, **characterized in that** heating tubes (6) through which working gas flows are connected to the working cylinders (2) of the Stirling engine (1) to heat said working gas.

10. A biomass combustor according to claim 8 or 9, **characterized in that** the Stirling engine (1) is capable of being modularly integrated into the combustion chamber (19) of the biomass combustor (20).

## Revendications

1. Moteur Stirling (1) à quatre pistons moteur (3) qui sont chacun disposés d'une manière tournée de 90° l'un par rapport à l'autre, comportant un engrenage planétaire (4) pour convertir le mouvement linéaire desdits pistons moteur (3) en mouvement de rotation d'un arbre de sortie commun (5), les centres de gravité des quatre pistons moteur (3) étant disposés dans un plan commun s'étendant perpendiculairement à l'axe de rotation de l'arbre de sortie (5), et les pistons moteur (3), pour le guidage droit, étant montés en rotation sur une manivelle à denture extérieure (11) qui est formée d'une roue planétaire tournant dans au moins une roue creuse à denture intérieure (13, 13'), moteur Stirling dans lequel, pour l'équilibrage total de forces et de moments d'inertie libres, deux masses équilibrantes (14, 14') sont assignées seulement à l'arbre de sortie commun (5) dans une manière que les pistons moteur (3) et les parts d'engrenage mues avec les pistons moteur (3) ont un centre de gravité commun qui se trouve dans l'axe de l'arbre de sortie (5).

2. Moteur Sterling selon la revendication 1, **caractérisé en ce que** des pistons moteur à double effet (3) sont prévus.

3. Moteur Sterling selon la revendication 1 ou 2, **caractérisé en ce qu'**une masse équilibrante (14) est formée d'une seule pièce avec l'arbre de sortie (5).

4. Moteur Sterling selon la revendication 2, **caractérisé en ce** de l'huile est transportée à travers la denture entre la manivelle à denture extérieure (11) et la roue creuse à denture intérieure (13').

5. Moteur Sterling selon l'une des revendications 1 à 4, **caractérisé en ce que** la manivelle (11), dans les deux sections extrêmes, comprend une denture extérieure (12, 12') pour engrener les deux roues creuses à denture intérieure (13, 13') qui sont situées sur les faces extrêmes.

6. Moteur Sterling selon la revendications 5, **caractérisé en ce que** la manivelle (11) est montée, entre les deux roues creuses (13, 13'), dans les masses équilibrantes (14, 14'), de préférence par l'intermédiaire de roulements à aiguilles ou de roulements à billes (16, 16'), excentriquement à l'arbre de sortie (5).

7. Moteur Sterling selon l'une des revendications 3 à 6, **caractérisé en ce que** les masses équilibrantes (14, 14') sont montées du côté intérieur vers la manivelle (11) et du côté extérieur vers une boîte (9) agencée de façon non-rotative, cependant que l'un des paliers (15, 15'; 16, 16') est un palier libre et l'autre des paliers (15, 15'; 16, 16') est un palier fixe.

8. Installation de combustion de biomasse (20) comportant une chambre de combustion (19), **caractérisée en ce qu'**un moteur Sterling (1) selon l'une des revendications 1 à 7 est prévu dans la chambre de combustion (19).

9. Installation de combustion de biomasse selon la revendication 8, **caractérisée en ce que** des tubes de réchauffage (6) traversés par du gaz de travail sont connectés aux vérins de travail (2) du moteur Stirling (1) pour réchauffer ledit gaz de travail.

10. Installation de combustion de biomasse selon la revendication 8 ou 9, **caractérisée en ce que** le moteur Sterling (1) est capable d'être intégré dans la chambre de combustion (19) de l'installation de combustion de biomasse (20) de façon modulaire.
